# EUROPEAN PATENT APPLICATION

(11) **EP 3 015 805 A1**
(43) Date of publication of application: **04.05.2016**
(21) Application number: 14817293.5
(22) Date of filing: 26.06.2014
(51) Int. Cl.: F27B 14/06, B22D 23/00

(54) **INDUCTION MELTING METHOD AND DEVICE FOR THE IMPLEMENTATION THEREOF (VARIANTS)**

(30) Priority: 27.06.2013 RU 2013129566
(71) Applicant: Volkov, Anatoly Evgenievich, Sverdlovskaya obl., 624740 (RU)
(72) Inventor: Volkov, Anatoly Evgenievich, Sverdlovskaya obl., 624740 (RU)
(74) Representative: Louis Pöhlau Lohrentz
(86) International application number: PCT/RU2014/000459
(87) International publication number: WO 2014/209172

(57) **Abstract**

The proposed invention relates to the field of foundry work and may be used for casting, reducing and purifying of any metals, including refractory and chemically active metals.

The claimed induction melting method and device for the implementation thereof combines loading a charge 2 into a mold 1, having a beveled top surface. Above the mold 1 there is mounted with clearance therefrom an inductor 3, having a beveled bottom surface. The charge is heated by a magnetic field 6, and additional sources of heat can be used. The top surface of the mold 1 is beveled parallel to the bottom surface of the inductor 3, thus forming an inclined slot 13, which permits a stream 8 of the melt to pass through an overflow element 4 into the ingot mold 9. The charge 2 is held in the mold 1 by a movable base in the form of a piston 5, which moves the charge into the inductor 3. The mold 1 may be configured with a fixed base, the charge 2 being fed via a charging chute 15 directly into the cavity of the inductor 3. The ingot mold 9 may be configured in the form of a cylinder rotatable about its axis or in the form of a chute capable of tilting and progressive motion. Between the mold 1 and the ingot mold 9 an intermediate container 17 may be mounted with independent heating sources 18. In the course of erection the clearance between the inductor 3 and the mold 1 surfaces may be adjusted as well as the inclination, i.e. the inclined slot 13 parameters.

Technical result - elimination of the major metal losses into scrap, increase of the metal yield and quality improvement of alloys.

## Description

### FIELD OF INVENTION

The proposed invention relates to the field of foundry work and can be used for casting, reducing and purifying any metals, including refractory and chemically active metals.

### PREVIOUS STATE OF ART

Induction melting methods and units are widely known in science and engineering. Induction melting acquired exceptionally wide use both with regard to the number of operating plants and to the process application diversity in the most various arts.

Thus, for example, as early as in 1953 the method of vertical crucible-free zone melting or in other words the floating-zone method was described, at which a ring heater or an inductor creates a melted zone retained in place by surface tension forces. The method is used extensively for silicon production and processing and is of frequent use in laboratory tests of refractory metals, semiconducting materials and various inorganic compounds [L.V. Zhuravleva - Electric Material Science. Basic vocational education manual, - M.: The Academy Publishing Center, 2006, p.138-139].

Liquid metal forging and impulse processing method is known [RU 2194595, 2000], where the melt is produced in a melt through stock and then transferred into a die with the die in its turn moving towards the stock until its full contact, afterwards the melt is exposed to gas pressure and forming and forging pressure via a ram. A unit for the above method implementation consists of a melting chamber with a feed metal stock located in it; when the stock is heated by a heater represented by an inductor or a plasma gun, electron-beam gun, electric arc, electrical resistance, etc. a molten pool is generated. When the melt reaches the stock bottom it is poured into the die located at some distance below the stock. The moment of the stock melting through is registered with a sensor. The metal melt is exposed to gas pressure supplied to the top melting chamber, low-and high frequency vibrations caused by vibratory mechanisms, electromagnetic fields from inductors, and what is more, to forming by rams and forging by blocks. The bottom chamber is pressed up and forced down from the top chamber by pneumatic cylinders.

The known method and the unit for implementation thereof allow processing of any metals including refractory and chemically active metals as well as component manufacture in one conversion step.

The closest engineering solution assumed as a prototype model is the method of ingot manufacture in a sectional mold and a unit for its implementation [M. L. Zhadkevich, etc. - Article in Titanium scientific and technical magazine, No. 1 (18) 2006, p. 24÷28], where the melt is produced by the inductor melting. The inductor location is around the sectional mold which is a "cold" crucible. The charge is fed into the crucible via a chute and melted; an ingot withdrawn downward is formed in a floating mold zone. The metal is melted in the "cold" crucible when it is resting on the bottom, at that the molten pool side surface is retained by electromagnetic field. A unit for the above method implementation consists of the "cold" crucible, a beveled mold, an ingot withdrawal system, an inductor and a chute for charge feeding.

The known method enables remelting with addition contamination and obtaining of ingot homogeneous chemistry and became a common use for remelting of particularly contaminated titanium sponge into ingots.

The method disadvantage is that the metal is refined only from detrimental volatile impurities. Nonvolatile impurities remain in the melt. The principle problem of the method is high energy consumption due to the use of the "cold" crucible additionally complicating the unit design and fabrication.

### OBJECT OF THE INVENTION

The objective taken as a basis for the proposed invention is improvement of the induction melting method use efficiency and its enhancement.

It is proposed to pursue the objective through claiming a metal induction melting method involving charge melting with a molten pool produced in the inductor above the mold through a magnetic field effect with subsequent molten pool pouring into a ingot mold; at that, as distinct from the known method, the charge is fed inside the inductor by its transfer from the mold or by its loading directly into the inductor; the mold and the inductor are mounted with a clearance between each other forming an inclined slot between the inductor bottom surface and the mold top surface through which the molten pool is poured through an overflow element into the ingot mold.

To accelerate the reduction reaction or to melt refractory metals additional molten pool reheating with independent heating sources (electron beam, plasma, microwaves, etc.) may be used.

In the claimed method an asymmetric inductor, i.e. the one with a beveled bottom surface is used, what allows forming an inclined slot from the mold side surface, i.e. the top surface of the latter is beveled parallel to the inductor bottom surface bevel, at that the inductor and the mold are located with a clearance relative to each other. The side surface of the molten pool until it is poured is retained inside the inductor with electromagnetic field. The melt does not flow out of the mold through a clearance until the moment when the height of the molten pool reaches the maximum allowable value based on the impressed magnetic force. When a magnetic force is not enough to retain the molten pool inside the inductor the melt is poured down through the clearance made in the form of an inclined slot serving as a chute and thus the depth of the molten pool is reduced. Further when the charge is fed into the inductor zone the melt height allowing the melt passing into the ingot mold through the inclined slot and an overflow element is generated again. Beveled overflow from the mold, i.e. the molten pool pouring through an inclined slot from the mold side surface provides for efficient refining of the obtained melt from insoluble light and heavy impurities which gravitate to the pool bottom or come to its surface and do not get into the ingot mold in the course of the ingot forming. The claimed method allows not only the melt refining, but also the process of metal reduction from various compounds may be ensured with simultaneous produced metal melt refining from the reduction reaction products.

An induction melting device as per variant one contains a mold, an inductor made with a possibility of a magnetic field imposition, charge, a molten pool, an ingot mold; at that, as distinct from the known unit, the mold and the inductor are located with a clearance relative to each other, the mold top surface and the inductor bottom surface are beveled relative to the horizontal plane, the mold top surface and the inductor bottom surface form an inclined slot, an overflow element directing the melt into the ingot mold is configured where the melt overflows from the mold, the mold is equipped with a movable base with a possibility of the charge moving from the mold into the inductor.

An induction melting device as per variant two contains a mold, an inductor configured with the possible magnetic field imposition, charge, a molten pool, an ingot mold; at that, as distinct from the known unit, the mold and the inductor are located with a clearance relative to each other, the mold top surface and the inductor bottom surface are beveled relative to the horizontal plane, the mold top surface and the inductor bottom surface form an inclined slot, an overflow element directing the melt into the ingot mold is configured where the melt overflows into the mold; the mold has a fixed base and a charging chute is mounted above the inductor to feed the charge into the inductor.

The clearance between the inductor and the mold surfaces forming an inclined slot may be adjusted in the course of erection by changing the distance and the inclination between the surfaces. The overflow element is configured for example in the form of a pouring lip. The ingot mold may be configured in the form of a rotatable cylinder with a standing axis or in a form of a chute capable of tilting and progressive motion, an intermediate container where the melt may be reheated with independent melting sources, may be mounted between the mold and the ingot mold.

The claimed method of combined melting and a device for implementation thereof are interrelated by a common inventive conception.

### BEST INVENTION EMBODIMENTS

The claimed method and the device (variants) are described below with the references to the attached drawings.

### Example 1 - metal induction melting using a device as per variant one.

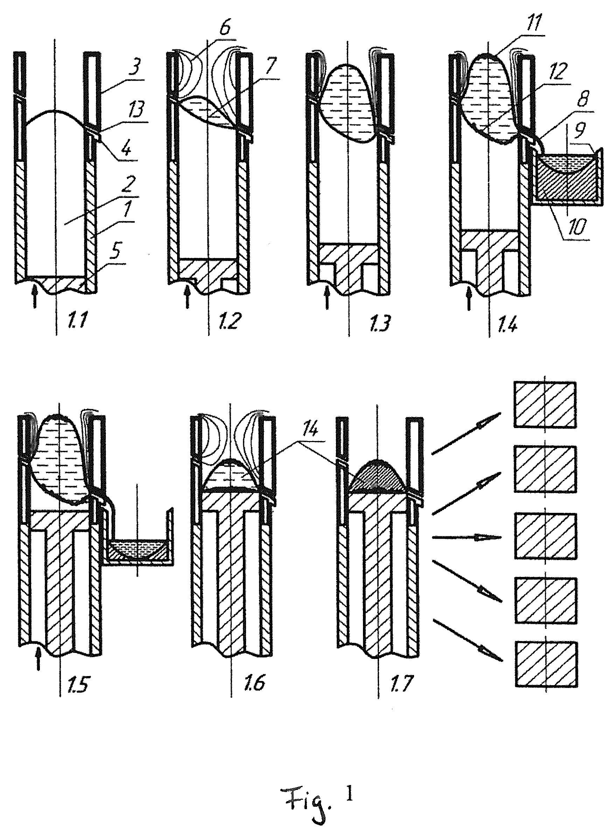

Fig. 1 shows the process of metal induction melting with the claimed method, illustrated by sequence of all stages shown in Fig. 1.1 - Fig. 1.7, using the device as per variant one.
Fig. 1.1 shows the preliminary stage of the metal induction melting using the device as per variant one, where the charge 2 is loaded into the mold 1. The charge 2 may be used, inter alia, in the form of preliminary crushed fraction or in the form of lumps or mixture thereof. The inductor 3 with a beveled bottom surface is mounted above the mold 1 and in coaxial relationship with it. The mold 1 is located at some distance from the bevel i.e. with clearance. The mold 1 top surface is beveled parallel to the inductor 3 bottom surface. The inductor 3 bottom surface and the mold 1 top surface form an inclined slot 13, enabling the molten pool 7 overflow through the mold 1 side surface via the overflow element 4. The charge 2 in the mold 1 is retained with a movable base in the form of a piston 5.
Fig. 1.2 shows the initial stage of the metal melting by a magnetic field 6 effect and the charge 2 raising with the piston 5 inside the inductor 3, where the molten pool 7 is produced.
Fig. 1.3 shows the stage of the molten pool depth increase to the maximum which the magnetic field is capable of retaining in the inductor 3 zone.
Fig. 1.4 shows the stage when the molten pool 7 flows as a stream 8 through the overflow element 4 into the ingot mold 9, where an ingot 10 is formed. Light impurities 11 are retained on the molten pool 7 surface in the inductor 3, and heavy impurities 12 are agglomerated at the pool bottom.
Fig. 1.5 shows the stage where the molten pool 7 fills the last regular mold 9.
Fig. 1.6 shows the stage of the final molten pool 7 overflow, the remaining metal 14 is retained on the piston 5 in the form of its melt with insoluble heavy and light impurities.
Fig. 1.7 shows the stage of the remaining metal 14 solidification after the inductor 3 magnetic field 6 soft shutdown. After the remaining metal 14 solidification the frozen-in heavy and light impurities are retained in it. After a sufficient amount of remaining metal 14 is accumulated it may be remelted at the same furnace for a more complete recovery of purified metal.

After the charge 2 melting a certain number of ingots 10 is formed which may be sent for conversion or these ingots may be welded into an electrode for subsequent remelting at vacuum arc furnaces. For example, titanium plants may remelt the charge and master alloys into various configuration ingots.

### Example 2 - metal induction melting using a device as per variant two.

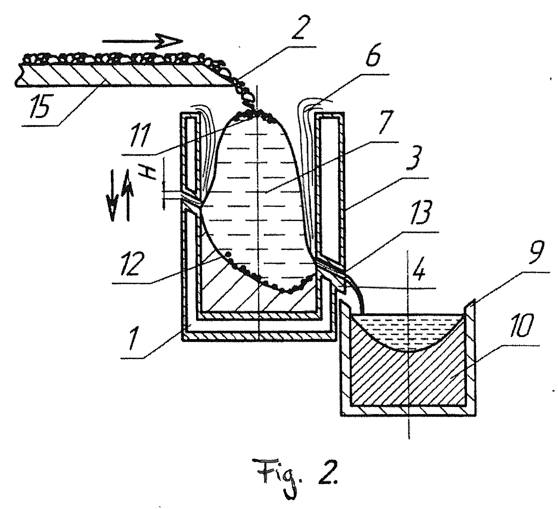

Fig. 2 shows a process of the claimed metal induction melting method modification using a device as per variant two. The mold 1 in configured in the form of a container with a fixed base. Above the mold 1 and in coaxial relationship with it the inductor 3 is mounted which has a beveled bottom surface. The mold 1 is at some distance from the bevel. The mold 1 top surface is beveled parallel to the inductor 3 bottom surface. The inductor 3 bottom surface and the mold 1 top surface form an inclined slot 13, enabling the molten pool 7 overflow through the the mold 1 side surface via the overflow element 4. The preliminary crushed charge 2 is fed into the inductor 3 via a charging chute in the form of a guide way 15. The charge 2 is melted with a magnetic field 6, producing the molten pool 7 with light impurities 11 agglomerated at the top and heavy impurities 12 agglomerated at the bottom. Through the overflow element 4 the molten pool 7 flows into the ingot mold 9, where the ingot 10 is formed. The method is implemented similarly to example 1.

An additional advantage of the given example, as compared to example 1, is the fact that the method implementation requires no long mold 1 with the piston 5, therefore the device as per variant two is more space-saving. At the same time, as distinct from example 1, implementation of example 2 requires mandatory charge 2 crushing for its loading into the inductor 3.

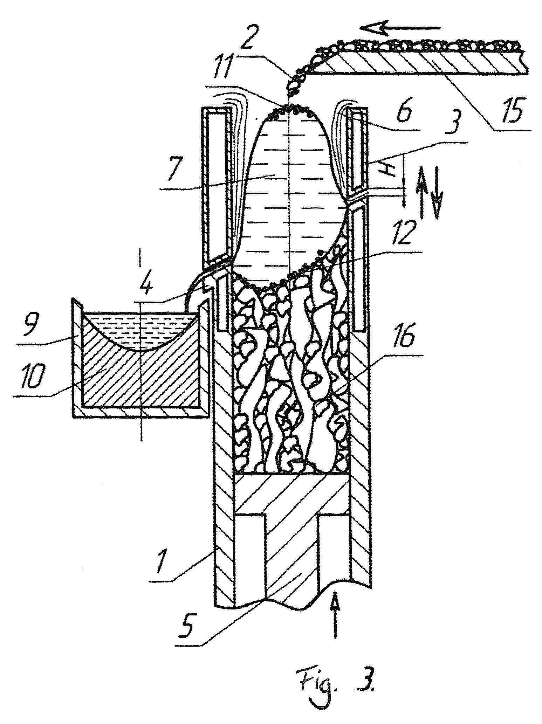

Example 3 - metal induction melting using the device as per variant one where lumpy charge is fed with the mold movable base and additionally small-size charge is fed simultaneously via a charging chute. Fig. 3 shows the flow-chart where the lumpy charge 16 from the mold 1 is fed with the movable base in the form of a piston 5 into the inductor 3, where it is melted with magnetic field 6. Simultaneously small-size charge 2 is loaded from the top into the inductor 3 using the charging chute in the form of the guide way 15. From the charge 2 fed into the inductor 3 from the top and the charge 16, fed into the inductor 3 from the bottom in the magnetic field 6 melting zone a molten pool 7 is generated where light impurities 11 are agglomerated at the top and heavy impurities 12 remain at the bottom. The molten pool 7 flowing down through the overflow element 4 into the ingot mold 9 forms and the ingot 10.

The melting method as per this example combines advantages of the method as per example 1 enabling melting of large charge lumps including remelting of an electrode or ingot with overall dimensions which allow their placing into the mold. This may significantly reduce the major costs of titanium companies related to scrap mechanical grinding for its introduction into a remelt. Besides an advantage of the method as per this example is the possible adding of the small-size charge, which may be represented by master alloys, from the top. This process is the most efficient when melting various alloys as well as in case of chemistry correction of electrodes or ingots.

The method as per the example allows melting of semi-electrodes intended for an electrode fabrication. This process is convenient as manufacture of high quality electrodes by melting omitting the compaction process may be arranged. At that, the task of homogeneous distribution of all alloying elements throughout the ingot volume is solved.

Thus, for example, a semi-electrode from commercially pure titanium may be melted from crushed titanium sponge if the molten pool 7 gets into a horizontal ingot mold 9, configured in the form of a future electrode. The claimed method allows fabrication of another semi-electrode from secondary scrap and master alloys. Horizontal casting compares favorably to the vertical casting as it allows layered distribution of various chemistry metal along the electrode. At that, after the electrode assembly from two halves any cross section of the electrode along its axis will contain equal amount of alloying elements. Therefore a subsequent vacuum arc remelting (VAR) may be carried out with the minimum power consumption and at the shortest time with the master alloy equalized throughout the ingot volume. As of today the master alloy of the compacted electrodes is not equally distributed along the axis, thus two or three VARs are required for its homogeneous distribution.

Semi-electrode melting is cost effective for manufacture as allows savings on the ingot molds and subsequent welding since the semi-electrodes may be welded to each other only in some points.

### Example 4 of the metal induction melting using the device as per variant one with a rotating ingot mold.

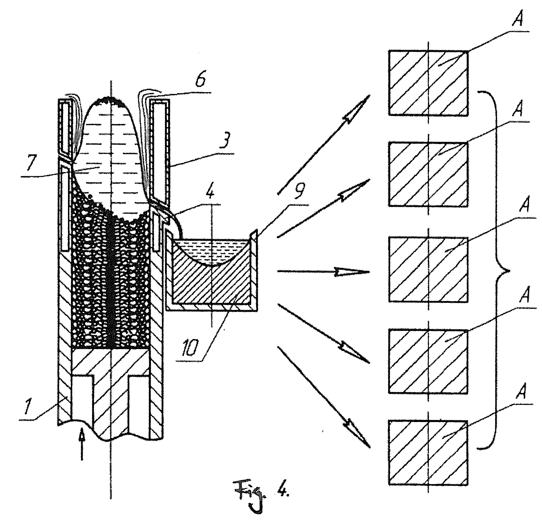

To improve the metal quality or to refine a particularly contaminated metal a more intensive refining shown in Fig. 4 is required. This example is similar to example 1; however the ingot mold 9 is configured as rotating about its axis. The ingot mold 9 rotation allows more efficient separation of detrimental light and heavy impurities from the primary melt. After the ingot 10 is produced its surface is turned, at that the impurities are machined of the ingot 10 surface. The ingot 10 production process is shown contingently with an assumed zone of detrimental light and heavy impurities - A.

The method may be also implemented with an additional increase of the chemistry homogeneity degree of the ingot 10. To this end the electrode is melted from produced ingots 10, randomly placed into the mold 1. When these ingots 10 are fused in the inductor 3 under magnetic field 6 the molten pool 7 is generated and through the overflow element 4 gets into the ingot mold 9, mounted horizontally and capable of tilting axial and diametrical motion. This additionally increases the degree of the melt agitation in the electrode sent to a subsequent remelting. The metal melt getting into the ingot mold 9 will be not only refined but also will be properly homogenized with regard to chemistry. The compacted electrodes currently sent to VAR in general are not refined from impurities and their chemistry is not homogeneous throughout the electrode volume.

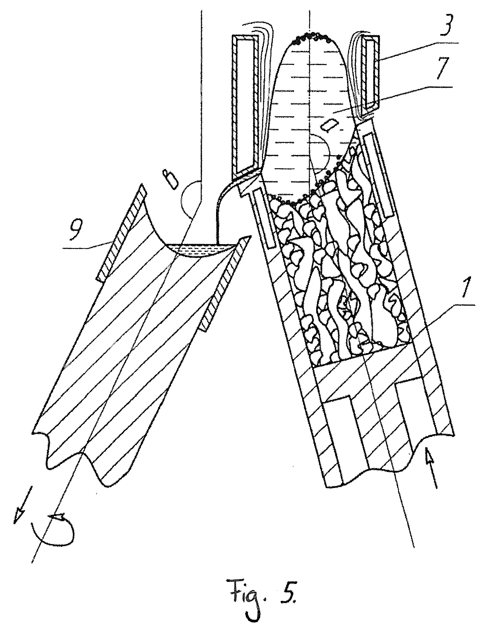

Example 5 of the metal induction melting using a device as per variant one where the mold axis is inclined to the inductor axis what is schematically shown in Fig. 5, Fig. 6 and Fig.7.

Fig. 5 shows the molten pool 7 overflowing from the mold 1, mounted with an inclination, and the ingot mold 9 configured in the form of a sliding mold with the axis at angle δ. The mold 1 axis is at the angle *α* to the inductor 3 axis. The method as per this example is implemented similarly to example 1 and allows additional lightening of the mold loading and the molten pool 7 overflow facilitation.

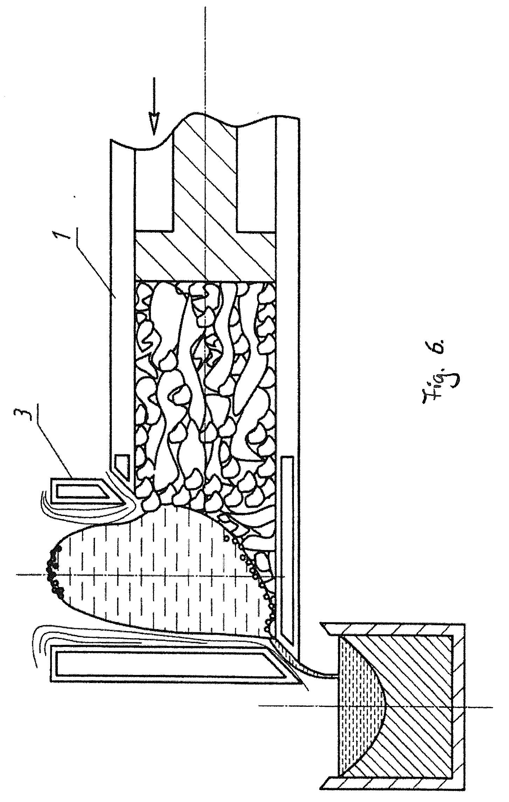

In Fig. 6 the mold 1 axis is normal to the inductor 3 axis. The method as per this example is carried out similarly to example 1 and allows enabling of space effective device deployment in the shop space and its equipment with an air-lock chamber (not shown in Fig. 6) to ensure continuous operation.

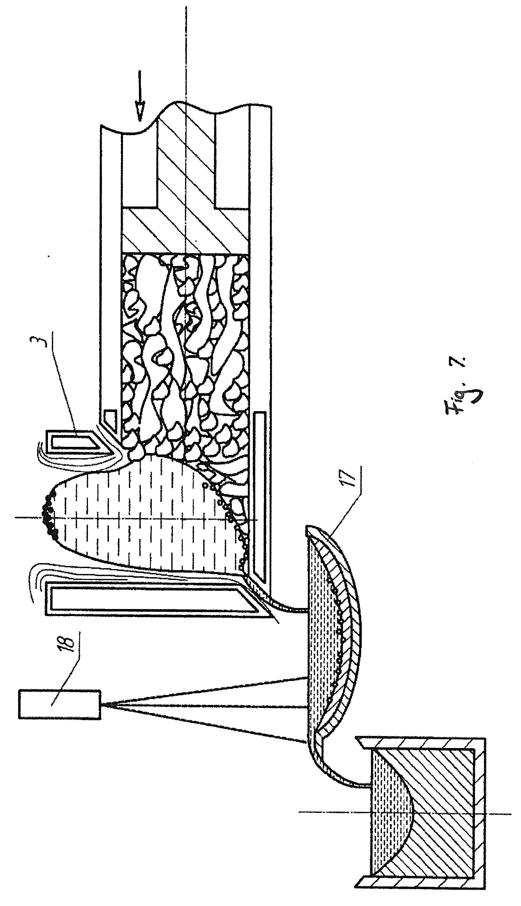

In Fig. 7 the mold 1 axis is normal to the inductor 3 axis, the intermediate container 17 is additionally mounted for the melt which is additionally reheated by an independent heating source 18. The method as per this example is carried out similarly to example 1 and enables additional refining of the produced melt.

### INDUSTRIAL APPLICABILITY

The claimed method and the device for implementation thereof are characterized by the irregular inductor and mold fabrication, with the inductor bottom surface located at a distance from the mold top surface and these surfaces are beveled at a certain angle relative to the horizontal plane; their arrangement of one above another enables the side pouring of the generated molten pool via an inclined slot. The claimed method of the beveled overflow of the metal melt allows refining of the produced melt from insoluble light and heavy impurities which fall on the molten pool bottom or come to its surface. Moreover the claimed beveled overflow method and variants of the device for implementation thereof enable the process of the metal reduction from various compounds with simultaneous refining of the produced metal melt from the reduction reaction products; to facilitate the reduction reaction or to melt the refractory metals use of additional molten pool reheating by independent heating sources (electron beam, plasma, microwave, etc.) is possible.

Use of the claimed invention for example for titanium industry may have great practical importance, including virtually complete elimination of the metal major losses into scrap, increase of the metal yield and significant alloy quality improvement.

The pilot unit for beveled overflow was built by the Research and Production Company Ruthenium (Russia) and Linn High Therm GmbH (Germany) and used for titanium melting and refining having proved the claimed technical result.

## Claims

1. A method of metal induction melting by charge melting with a molten pool generation under the magnetic field effect in the inductor, mounted above the mold, and subsequent molten pool overflow into the ingot mold, **characterized by** the fact that the charge is fed inside the inductor and the mold and the inductor are located with a clearance relative to each other forming an inclined slot between the inductor bottom surface and the mold top surface through which the molten pool overflows into the ingot mold via the overflow element.

2. The method as per claim 1, **characterized by** the charge feeding into the inductor through the charge transfer from the mold by means of the the mold bottom movement towards the inductor.

3. The method as per claim 1, **characterized by** the charge feeding into the inductor by its loading directly into the inductor.

4. An induction melting device comprising a mold, an inductor with possible magnetic field imposition, a charge, a molten pool, an ingot mold, **characterized by** the mold and the inductor arrangement with a clearance relative to each other, the mold top surface and the inductor bottom surface beveled relative to the horizontal plane, the mold top surface and the inductor bottom surface forming the inclined slot, the overflow element directing the melt stream into the ingot mold configured where the melt overflows from the mold and the mold equipped with a movable base, configured so that to enable the charge moving from the mold into the inductor.

5. Device as per claim 4 **characterized by** a charging chute above the inductor to feed the charge into the inductor.

6. Device as per claim 4 **characterized by** the ingot mold configured in the form of a cylinder rotatable about its axis.

7. Device as per claim 4 **characterized by** the ingot mold in the form of a chute capable of tilting and progressive motion.

8. Device as per claim 4 **characterized by** an intermediate container mounted between the mold and the ingot mold with the possibility of its reheating by independent heating sources.

9. Device as per claim 4 **characterized by** an inclined slot with an adjustment feature for the clearance between the inductor and the mold surfaces and the inclination between the surfaces.

10. An induction melting device comprising a mold, an inductor, with possible magnetic field imposition, a charge, a molten pool, an ingot mold, **characterized by** the mold and the inductor arranged with a clearance relative to each other, the mold top surface and the inductor bottom surface beveled relative to the horizontal plane, the inclined slot formed by the mold top surface and the inductor bottom surface, the overflow element directing the melt stream into the ingot mold configured where the melt overflows from the mold, a fixed base of the mold and a charging chute mounted above the inductor to load the charge into the inductor.

11. Device as per claim 10 **characterized by** the mold configured in the form of a cylinder rotatable about its axis.

12. Device as per claim 10 **characterized by** the mold configured in the form of a chute capable of tilting and progressive motion.

13. Device as per claim 10 **characterized by** the intermediate container mounted between the mold and the ingot mold with the possibility of its reheating by independent heating sources.

14. Device as per claim 10 **characterized by** the inclined slot with an adjustment feature for the clearance between the inductor and the mold and the inclination between the surfaces.
